# EUROPEAN PATENT APPLICATION

(11) **EP 1 732 079 A2**
(43) Date of publication of application: **13.12.2006**
(21) Application number: 06011696.9
(22) Date of filing: 06.06.2006
(51) Int. Cl.: G11B 27/34, G06F 17/30, G11B 27/10

(54) **Display control method, content data reproduction apparatus, and program**

(30) Priority: 08.06.2005 JP 2005168104
(71) Applicant: SONY CORPORATION, Tokyo (JP)
(72) Inventor: KInouchi, Takashi, Shinagawa-ku Tokyo (JP)
(74) Representative: Körber, Martin Hans

(57) **Abstract**

A display control method, content data reproduction apparatus 1, and program for displaying a search screen of content data to which attribute items are assigned for each of a plurality of attributes, which receive as input a display instruction of a search screen displayed in a hierarchy based on the plurality of attributes and display a search screen corresponding to the input display instruction by linking the attribute items assigned to the attributes linked with the search screen and number data indicating the number of the content data to which the attribute items are assigned.

## Description

### CROSS REFERENCE TO RELATED APPLICATION

The present invention contains subject matter related to Japanese Patent Application No. 2005-168104 filed in the Japan Patent Office on June 8, 2005, the entire content of which being incorporated herein by reference.

### BACKGROUND OF THE INVENTION

### 1. Field of Invention

The present invention relates to a display control method, content data reproduction apparatus, and program for displaying a reproduction screen of content data.

### 2. Description of the Related Art

In recent years, the increase in storage capacity of recording media and the advances in technology for compression of music, movies, and still images, an enormous number of track data can be stored in the recording media of mobile audio players. Such mobile audio players are provided with liquid crystal displays etc., but these have limited display space, so search screens may be displayed for enabling users to efficiently search for the track data to be played back from among the enormous track data. In conventional mobile audio players, for example, the search screens are displayed based on attribute items such as the artists, albums, and genres previously assigned to the track data. As an example of specific related art, there is Japanese Patent Publication (A) No. 2001-76415.

In the above mobile audio players, however, it is not possible to determine how many track data are assigned to an attribute item until when for example selecting the attribute item displayed on the search screen and displaying the next search screen. The same is true in a player reproduction video data and other content data besides track data.

### SUMMARY OF THE INVENTION

In the present invention, it is therefore desirable to provide a display control method, content data reproduction apparatus, and program enabling efficient searching of content data to which attribute items are assigned for each of the plurality of attributes.

According to the present invention, there are provided a display control method, content data reproduction apparatus, and program for displaying a search screen of content data to which attribute items are assigned for each of a plurality of attributes, which receive as input a display instruction of a search screen displayed in a hierarchy based on the plurality of attributes and display a search screen corresponding to the input display instruction by linking the attribute items assigned to the attributes linked with the search screen and number data indicating the number of the content data to which the attribute items are assigned.

According to a first embodiment of the present invention, there is provided a data control method including receiving a display instruction signal of a search screen to display a search screen of content data in accordance with that signal and displaying, on a display, attribute item data and number data indicating the number of the content data to which the attribute item data are assigned linked together.

Preferably, the display control method further includes confirming communication of content data, updating management data for managing the number data based on the attribute item data assigned to the content data when confirming communication of the content data, and displaying number data indicating the number of content data to which the attribute item data is assigned based on the updated management data.

More preferably, the display control method further includes updating change data indicating a change of the number data based on the attribute item data assigned to the content data when confirming communication of the content data and displaying the change data on the display.

Preferably, the display control method further includes generating non-input contents designation data indicating attribute items of content data for which input is to be refused and inputting, from an external device, content data to which attribute items are assigned other than attribute items shown by the non-input contents designation data.

According to a second embodiment of the present invention, there is provided a content data reproduction apparatus including a display part displaying a search screen included attribute item data for identifying content data, a reproduction part reproducing the content data, and a control part configured to make the display part display attribute item data relating to attributes linked with the search screen and number data indicating the number of the content data to which the attribute item data are assigned linked together.

Preferably, the content data reproduction apparatus further includes a communication part configured to communicate content data with an external device, the control part being configured to update management data for managing the number data based on the attribute item data assigned to the content data when confirming communication of the content data.

Preferably, the control part is configured to update a change of data indicating a change of the number data based on the attribute item data assigned to the content data and makes the display part display the change data when confirming communication of the content data.

Preferably, the control part is configured to refer to non-input contents designation data indicating attribute items of content data for which input from the external device is to be refused and inputs, from the external device, the content data to which attribute items are assigned other than attribute items shown by the non-input contents designation data.

According to a third embodiment of the present invention, there is provided a content data reproduction apparatus including a display part displaying a search screen, included attribute item data for identifying content data, hierarchically based on the attributes, a reproduction part reproducing the content data, and a control part configured to make the display part display an attribute item data relating to an attribute linked with the search screen and a number data indicating the number of the attribute item relating to attributes linked with the search screen to be displayed next by designation of the attribute item data.

Preferably, the control part is configured to make the display part display, linked together, the attribute item relating to the attribute linked with the search screen to be displayed next and the number data indicating the number of content data to which the attribute item is assigned when displaying that screen.

According to a fourth embodiment of the present invention, there is provided a content data reproduction apparatus including display means for displaying a search screen included attribute item data for identifying content data, a reproduction means reproducing the content data, and a control means for making the display part display, linked together, an attribute item data relating to attributes linked with the search screen and a number data indicating the number of the content data to which the attribute item data has been assigned.

According to a fifth embodiment of the present invention, there is provided a program including:
routine for carrying out the display of a display part on a search screen, including attribute item data for identifying content data, hierarchically based on the attribute, a routine reproducing the content data, and a routine for carrying out the display of a display part, linked together, the attribute item data relating to the attribute linked with the search screen and the number data indicating the number of the attribute items relating to the attribute linked with the search screen to be displayed next by designation of the attribute item data.

In summary, according to the present invention, there can be provided a display control method, content data reproduction apparatus, and program able to efficiently display information enabling a user to determine content data for reproduction other than content data being currently played back on a reproduction screen displaying the attributes of content data.

### BRIEF DESCRIPTION OF THE DRAWINGS

These and other objects and features of the present invention will become clearer from the following description of the preferred embodiments given with reference to the attached drawings, wherein:
FIG. 1 is a diagram showing the configuration of a mobile audio player according to an embodiment of the present invention;
FIG. 2 is a table for explaining attributes assigned to track data stored in the mobile audio player shown in FIG. 1;
FIGS. 3A to 3C are schematic views of the mobile audio player shown in FIG. 1;
FIGS. 4 is a view for explaining a search screen (uppermost level) displayed on an LCD panel shown in FIG. 1;
FIG. 5 is a view for explaining a search screen (artist display) displayed on the LCD panel shown in FIG. 1;
FIG. 6 is a view for explaining transition of the search screen shown in FIG. 5;
FIG. 7 is a view for explaining a search screen (album display) displayed on the LCD panel shown in FIG. 1;
FIG. 8 is a view for explaining a modification of the search screen shown in FIG. 5;
FIG. 9 is a flow chart for explaining an example of the operation where the mobile audio player shown in FIG. 1 receives as input track data from a computer;
FIGS. 10A to 10D are views for explaining artist table data AR_T, album table data AL_T, genre table data J_T, and track table data T_J; and
FIG. 11 is a flow chart for explaining an example of operation where the mobile audio player shown in FIG. 1 receives as input a search screen display instruction from a user.

### DESCRIPTION OF THE PREFERRED EMBODIMENTS

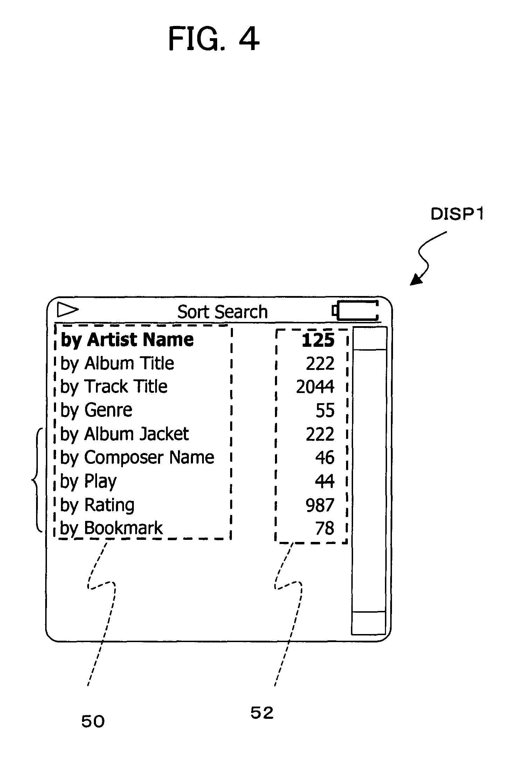

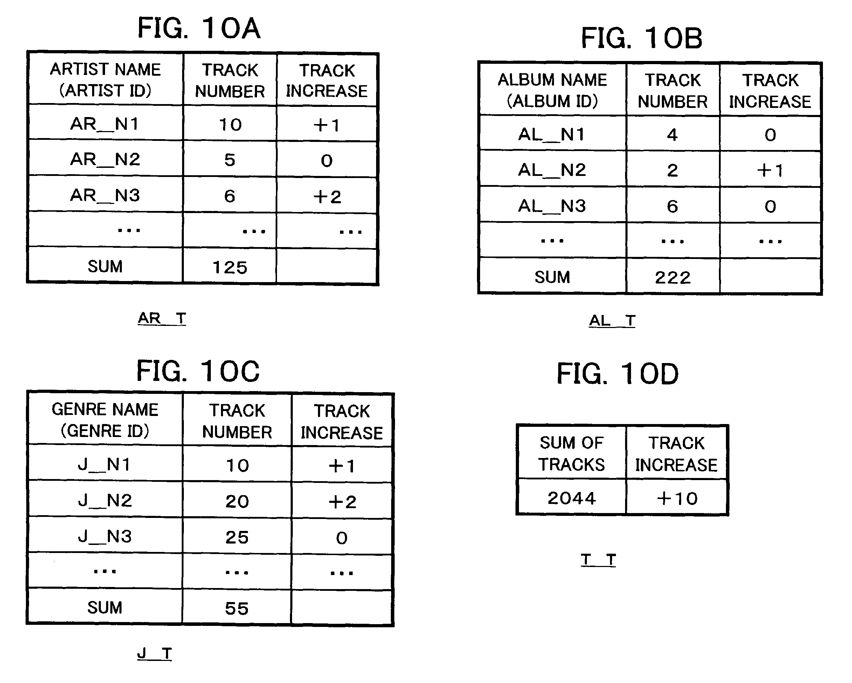

Below, a mobile audio player of an embodiment of the present invention will be explained. First, the correspondence between components of the present embodiment and components of the claims will be explained. The track data of the embodiment is an example of the content data of the present invention. The artist name, album name, track name, etc. of the present embodiment are examples of attribute items of the claims. Track number data 52, 62, 62a, etc. displayed on the search screens DISP1, DISP2, and DISP2a shown in FIG. 4, FIG. 5, FIG. 6, and FIG. 8 etc. linked with the attribute items are examples of the number data of the present invention. Further, the various types of data shown in FIG. 10 are examples of the management data of the claims.

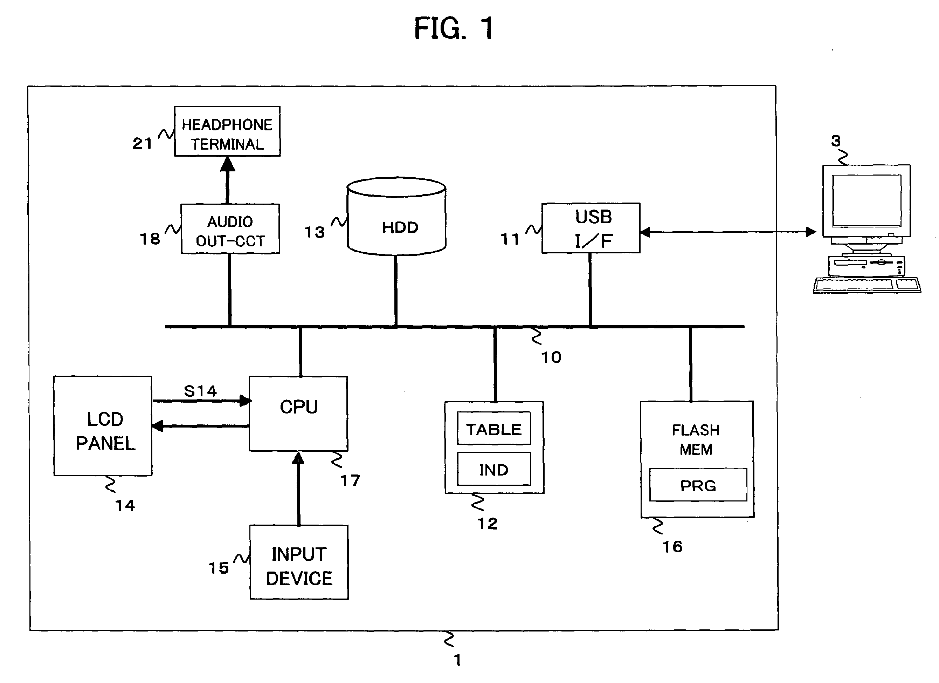

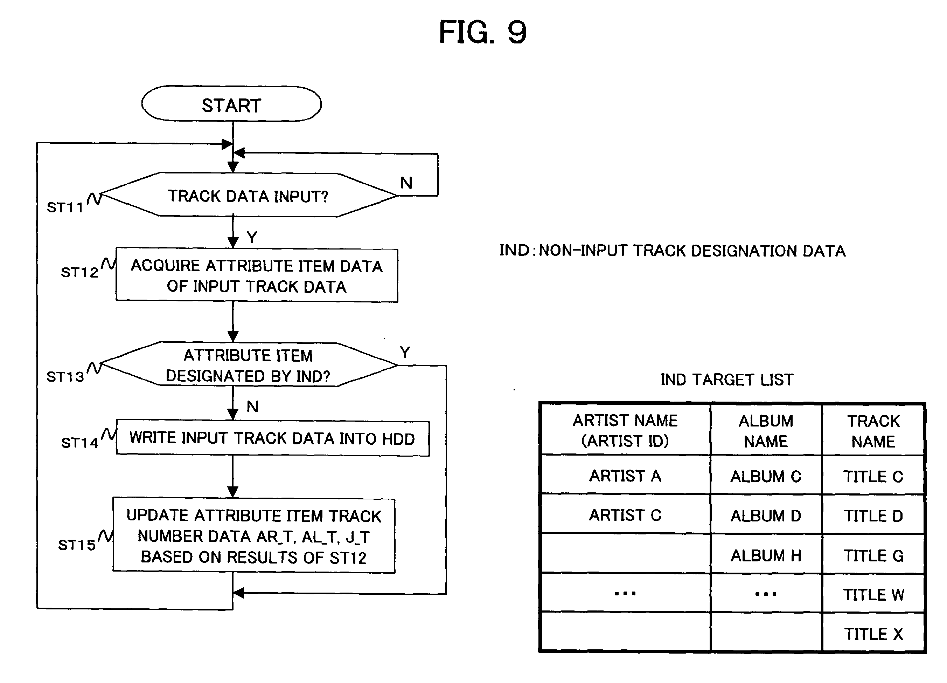

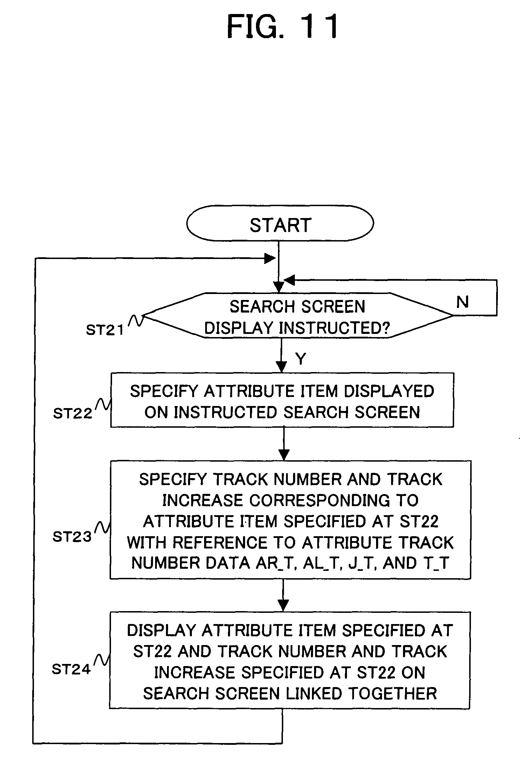

Step ST21 shown in FIG. 11 is an example of a first step and a first routine of the claims, while steps ST22 to ST24 are an example of a second step and a second routine of the claims. The steps shown in FIG. 9 are an example of a third step of the claims. A program PRG shown in FIG. 1 is an example of the program of the claims. Further, an LCD panel 14 is an example of the display part of the present invention, and a CPU 17 etc. are an example of a control part of the claims.

Below, preferred embodiments of the present invention will be explained. FIG. 1 is a view of the configuration of a mobile audio player 1 according to the embodiment of the present invention. As shown in FIG. 1, the mobile audio player 1, for example, has a universal serial bus (USB) interface 11, synchronous dynamic random access memory (SDRAM) 12, hard disk drive (HDD) 13, liquid crystal display (LDD) panel 14, input device 15, flash memory 16, central processing unit (CPU) 17, and audio output circuit 18. The USB interface 11, SDRAM 12, HDD 13, flash memory 16, CPU 17, and audio output circuit 18 are connected via for example a data bus 10.

The USB interface 11 is connected to a personal computer 3 and inputs/outputs data with the personal computer 3. The SDRAM 12 temporarily stores the data etc. relating to the processing of the CPU 17.

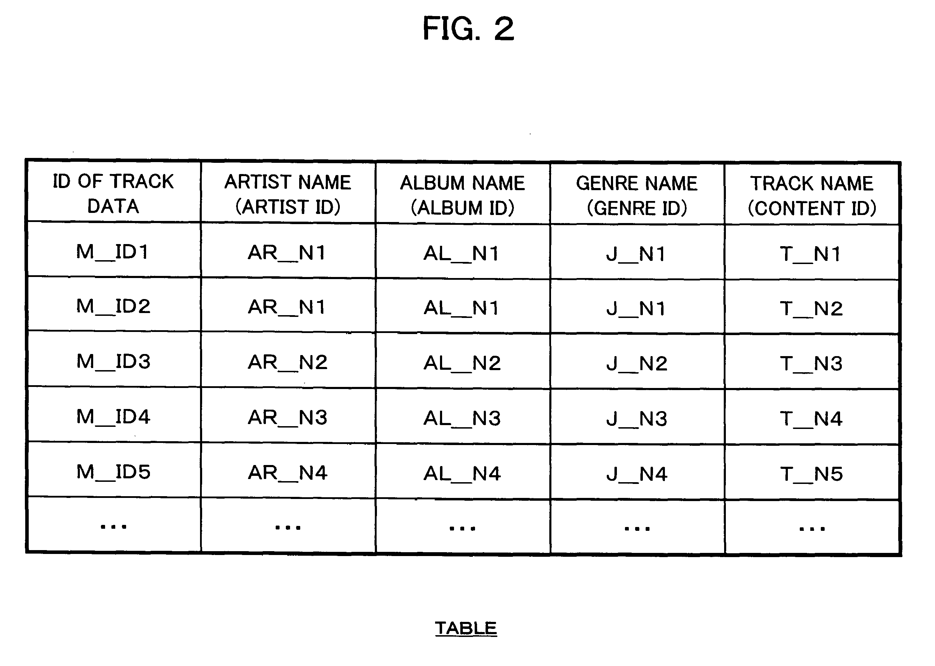

The HDD 13 stores compressed (or non-compressed) track data (music data). The track data is written into the HDD 13 from the personal computer 3 via the USB interface 11. The HDD 13 has a storage capacity of for example 20 GB and can store track data of about 10,000 tracks (equivalent to 700 compact discs) compressed by adaptive transform acoustic coding (ATRAC) 3 etc. The individual track data stored in the HDD 13 (hereinafter also simply referred to as "track data"), as shown in FIG. 2, is included identification data M_ID, artist name data (in the order of Japanese syllabary or English alphabetic sequence) AR_N, album name data AL_N, genre name data J_N, and track name data T_N linked by management data TABLE. The management data TABLE is stored in the HDD 13 and read out to the SDRAM 12 at the time of for example activation of the mobile audio player 1.

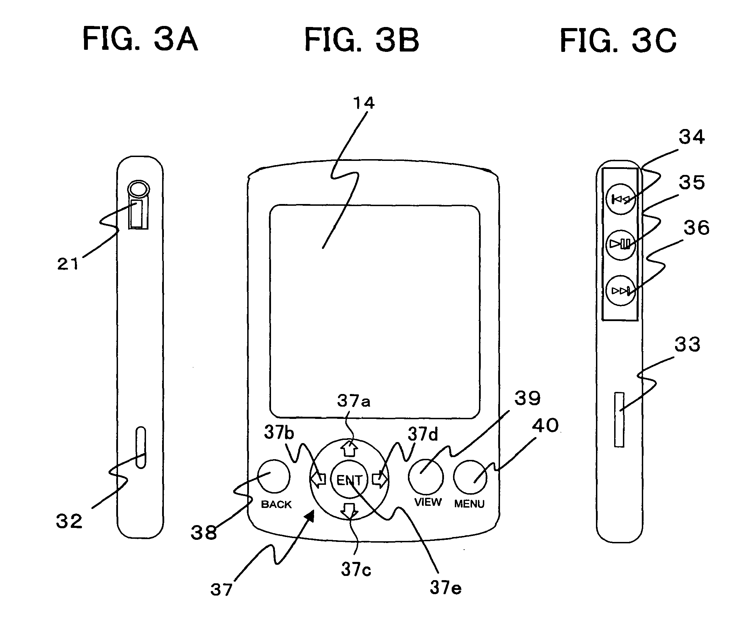

The LCD panel 14 is provided on a front surface of a housing of the mobile audio player 1 as shown in FIG. 3B. Various screens are displayed on the LCD panel 14 by the CPU 17. As main screens displayed on the LCD panel 14, there are for example a menu screen, track selection screen, setup screen, and reproduction screen. These screens are switched (changed) in response to key operation of the user. Further, the LCD panel 14 is a touch panel which detects a position on the screen touched by the user by his or her finger etc. and outputs a detection position signal S14 indicating that position to the CPU 17. The LCD panel 14 may be for example an organic electroluminescence display (organic EL display).

The input device 15 is included the various keys provided on the housing of the mobile audio player 1 as shown in FIGS. 3A to 3C and operated by the user. The input device 15 inputs the data by the touch panel function of the LCD panel 14. As shown in FIG. 3A, one side face of the mobile audio player 1 is provided with a headphone terminal 21 and a HOLD key 32. As shown in FIG. 3B, the front surface of the mobile audio player 1 is provided with the LCD panel 14, a BACK key 38, a cross key 37, a VIEW key 39, and a MENU key 40. The cross key 37 has an up cross-key 37a for moving a cursor to the top of the screen, a left cross-key 37b for moving the cursor to the left of the screen (lower level), a down cross-key 37c for moving the cursor to the bottom of the screen, a right cross-key 37d for moving the cursor to the right of the screen (higher level), and an execute key 37e for inputting an execute instruction such as a reproduction instruction. As shown in FIG. 3C, the other side face of the mobile audio player 1 is provided with a fast rewind key 34, a play/pause key 35, a fast forward key 36, and a volume dial 33.

The flash memory 16 stores for example a program PRG defining the operation of the CPU 17.

The audio output circuit 18 outputs an audio signal in accordance with the track data decoded by the CPU 17 to the headphone terminal 21.

The CPU 17 centrally controls the operation of the mobile audio player 1 explained in the present embodiment based on the program PRG read out from the flash memory 16. Further, the CPU 17 reads out the track data selected by the user based on the search screen explained later from the HDD 13, decodes (plays back) the same, and outputs this to the audio output circuit 18.

The CPU 17 for example hierarchically changes and displays search screens of the track data based on the operation signal from the input device 15. The CPU 17 displays for example the search screen DISP1 on the LCD panel 14 as shown in FIG. 4 as the uppermost level. The CPU 17 displays "by Artist Name", "by Album Title", "Track Title", and "by Genre" as default as the highest search level attribute item data 50 on the search screen DISP1 as shown in FIG. 4. Note that, the CPU 17 can newly add attribute items such as "Album Jacket", "Composer Name", "Playlist", "Rating", and "Bookmark" in response to the operation of the input device 15 by the user.

The CPU 17 displays track number data 52 indicating the numbers of track data to which attribute items are assigned linked with the attribute items 50 shown in FIG. 4. For example, the example shown in FIG. 4 shows that the artist name is assigned to 125 track data. Note that, the CPU 17 may indicate the number of attribute items which will be displayed on the search screen next linked with each of the attribute items 50 when an attribute item is selected by the user. In this case, the example shown in FIG. 4 shows that the mobile audio player 1 holds the track data of 125 artists (groups).

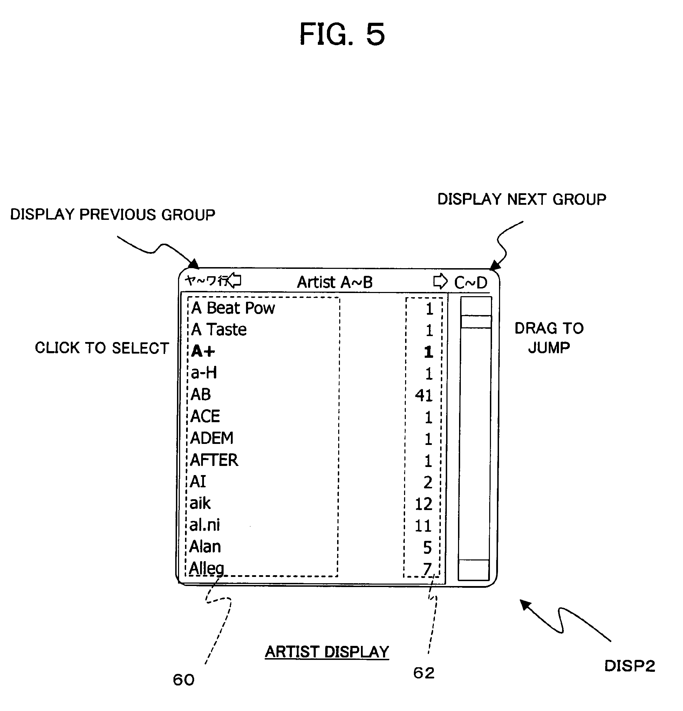

When "by Artist Name" is designated by operation of the input device 15 by the user during the display of the search screen DISP1 shown in FIG. 4 on the LCD panel 14, the CPU 17 displays for example the search screen DISP2 shown in FIG. 5 on the LCD panel 14. The above designation is for example carried out by the user operating the up cross-key 37a and the down cross-key 37c to position the cursor on "by Artist Name" and operating the execute key 37e in that state.

The CPU 17, as shown in FIG. 5, sorts the tracks by artist name as the attribute item 60 and displays the artist names on the search screen DISP2. The attribute items include, other than the artist name, the genre name, content name, album name, playlist name, artist table, album table, track table, etc. The CPU 17 displays track number data 62 indicating the number of the track data to which an attribute item is assigned linked with each of the attribute items 60 shown in FIG. 5. For example, the example shown in FIG. 5 shows that the mobile audio player 1 holds 41 track data of an artist "AB".

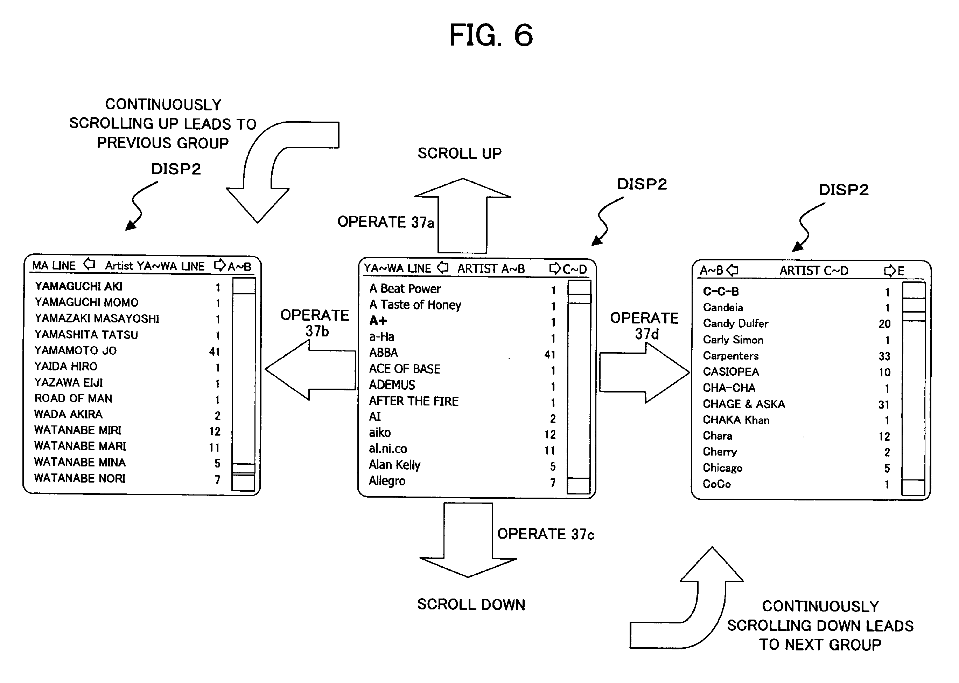

The CPU 17, as shown in FIG. 5, displays a portion of the sorted artist names on the search screen DISP2. When the left cross-key 37b shown in FIG. 3B is operated by the user, it displays a group of sorted artist names before the artist names currently displayed as shown in FIG. 6. Further, when the right cross-key 37d is operated by the user, the CPU 17 displays a group of sorted artist names after the artist names currently displayed as shown in FIG. 6.

Further, as shown in FIG. 6, when the up cross-key 37a is continuously operated, the CPU 17 scrolls up in the group of sorted artist names currently displayed on the search screen DISP2. Further, as shown in FIG. 6, when the down cross-key 37c is continuously operated on the search screen DISP2, the CPU 17 scrolls down in the group of sorted artist names currently displayed.

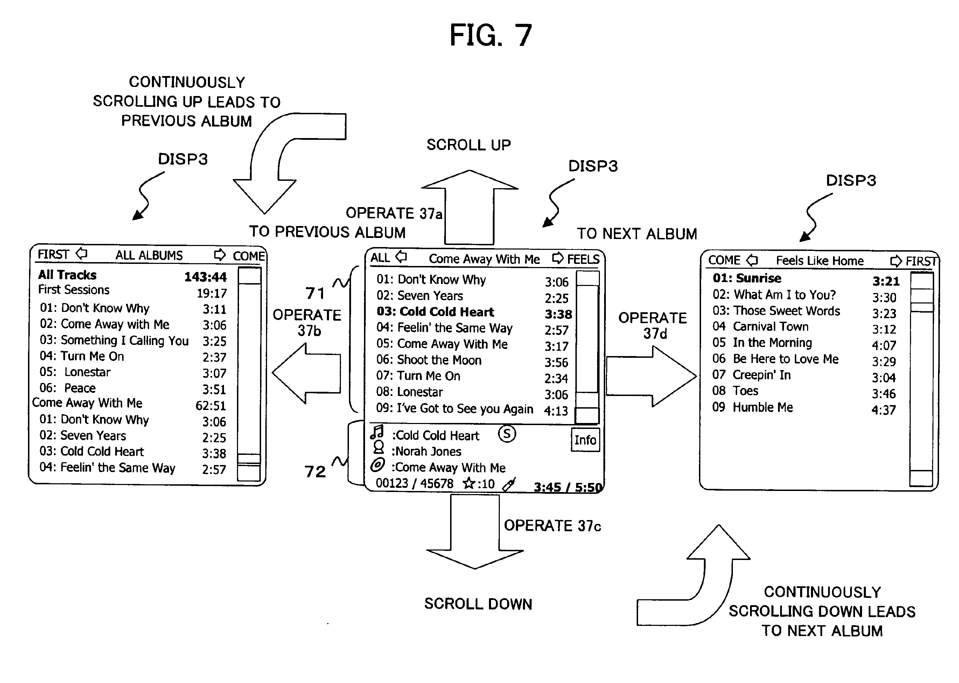

When "by Album Title" is designated by the operation of the input device 15 by the user during the display of the search screen DISP1 shown in FIG. 4 on the LCD panel 14, the CPU 17 displays for example the search screen DISP3 on the LCD panel 14 shown in FIG. 3B. The CPU 17, as shown in FIG. 7, displays a reproduction list 71 showing title name data of the track data in one album and their reproduction times linked on the search screen DISP 3. Further, the search screen DISP3 displays a reproduction track attribute table 72 displaying the title name data of the track data currently being played, the artist name data, the album name data, the reproduction position data, the rating data, etc.

When the left cross-key 37b shown in FIG. 4 is operated by the user during the display of the search screen DISP3 shown in FIG. 7, the CPU 17 displays the title name data of the track data of the album sorted one album before the album name currently displayed and its reproduction time linked together. Further, when the right cross-key 37d shown in FIG. 4 is operated by the user during the display of the search screen DISP3 shown in FIG. 7, the CPU 17 displays the title name data of the track data in the album sorted one album after the album name currently displayed and its reproduction time linked together.

Further, as shown in FIG. 7, when the up cross-key 37e is continuously operated, the CPU 17 scrolls up in the title name data of the track data and the reproduction time linked together in the album currently displayed on the search screen DISP3. Further, as shown in FIG. 7, when the bottom cross-key 37c is continuously operated, the CPU 17 scrolls down in the title name data of the track data and the reproduction time linked together in the album currently displayed on the search screen DISP3.

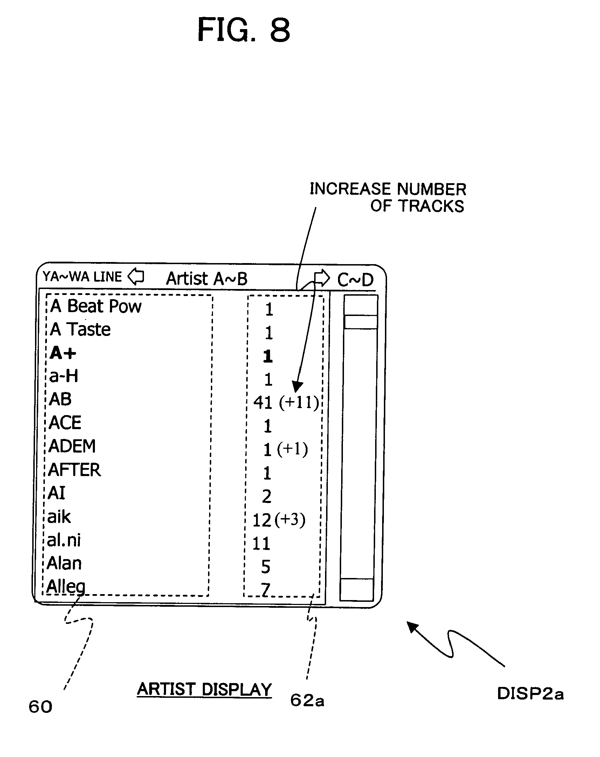

Further, when the mobile audio player 1 is connected to the computer 3 as shown in FIG. 1, the CPU 17 may display track number data 62a further indicating the increase of the track number data of each attribute item by the track data input from the computer 3. The base value for calculating the increase is the number of tracks held by the player when it was connected to the computer the previous time. The number of tracks increased by the connection with the computer the current time is displayed based on this base number of tracks. Not only connection with a computer, but also direct download of content by the player (terminal) from a server may be considered as an embodiment. In this case, the increase is displayed for each download based on the number of tracks held in the player in the previous download. The example of FIG. 8 shows that the number of tracks of the track data of the artist "AB" increases by "11" and becomes "41".

Note that in the example shown in FIG. 8, the case where the track number data of each attribute item increased was exemplified, but for example, when the track data recorded in the HDD 13 shown in FIG. 1 is erased at the time of connection with the computer 3, the decrease in the track number data of each attribute item may be displayed on the search screen DISP2a.

The CPU 17 generates for example non-input track designation data IND indicating attribute items (artists, albums, genres) etc. of track data not to be input from the computer 3 in accordance with operation of the input device 15 by the user and stores this in the SDRAM 12 or HDD 13. When receiving track data from the computer 3, the CPU 17 writes the track data into the HDD 13 only when the attribute item of the input track data is not shown in the non-input track designation data IND. Note that when the CPU 17 is connected with the computer 3, it may transmit the non-input track designation data IND read out from the SDRAM 12 or the HDD 13 to the computer 3 via the USB interface 11. In this case, the computer 3 controls the system so as not to output to the mobile audio player 1 any track data to which an attribute item indicated by the non-input track designation data IND input from the mobile audio player 1 is assigned.

Due to this, when subscription type track data distributed in push marketing campaigns is input from the computer 3 to the mobile audio player 1, the recording of a large amount of track data which the user is not interested in into the HDD 13 by the mobile audio player 1 can be avoided. As a result, the search efficiency of the track data by the user can be raised and, at the same time, the recording capacity of the HDD 13 can be efficiently utilized.

Below, an example of operation of the mobile audio player 1 shown in FIG. 1 will be explained.

### First Example of Operation

In this example of operation, the case where the mobile audio player 1 receives as input the track data from the computer 3 will be explained. FIG. 9 is a flow chart for explaining this example of operation.

### Step ST11

The CPU 17 of the mobile audio player 1 judges whether the player has been connected with the computer 3 shown in FIG. 1 and if it receives as input the track data via the USB interface 11. If yes, the routine proceeds to step ST12.

### Step ST12

The CPU 17 acquires the attribute item data assigned to the track data from among the track data input at step ST11.

### Step ST13

The CPU 17 judges whether or not the attribute item data acquired at step ST12 is indicated in the non-input track designation data IND read out from the SDRAM 12 or the HDD 13. When judging that it is indicated, the routine returns to step ST11, while when judging that it is not indicated, the routine proceeds to step ST14.

### Step ST14

The CPU 17 writes the track data received at step ST11 into the HDD 13.

### Step ST15

The CPU 17 increments (updates) the track number data and the track increase data of corresponding items of the various types of attribute item table data based on the attribute item data of the input track data acquired at step ST12.

Specifically, for example, as shown in FIG. 10, the CPU 17 generates, as the attribute item table data, artist table data AR_T, album table data AL_T, genre table data J_T, and track table data T_J and makes the SDRAM12 store this. The artist table data AR_T indicates the number of tracks of an artist stored in the HDD 13 and the increase in the number of tracks due to the previous input for each artist. The album table data AL_T indicates the number of tracks of an album stored in the HDD 13 and the increase in the number of tracks due to the previous input for each album. The genre table data J_T indicates the number of tracks of a genre stored in the HDD 13 and the increase in the number of tracks due to the previous input for each genre. The track table data T_J indicates the number of tracks stored in the HDD 13 and the increase in the number of tracks due to the previous input.

### Second Example of Operation

In this example of operation, a case where the mobile audio player 1 receives a search screen display instruction from the user will be explained. FIG. 11 is a flow chart for explaining this example of operation.

### Step ST21

The CPU 17 of the mobile audio player 1 judges whether it has received a search screen display instruction by operation of the input device 15 by the user. When yes, the routine proceeds to step ST22.

### Step ST22

The CPU 17 specifies an attribute item displayed on the search screen instructed by the search screen display instruction received at step ST21. The CPU 17, for example, in the case of displaying the search screen DISP2a shown in FIG. 8, specifies the 13 artist names shown in FIG. 5 as the attribute items to be displayed.

### Step ST23

The CPU 17 specifies the track number data and the track increase data for each of the attribute items which were specified and displayed at step ST22 based on the various types of attribute item table data shown in FIG. 10. The CPU 17, for example, in the case of displaying the search screen DISP2a shown in FIG. 8, specifies the track number data and the track increase data corresponding to the artists to be displayed based on the artist table data AR_T shown in FIG. 10.

### Step ST24

The CPU 17 displays the attribute item specified at step ST22 and the track number data and track increase data specified at step ST23 on the search screen linked together. The CPU 17 displays for example the search screen DISP2a shown in FIG. 8 on the LCD panel 14.

As explained above, in the mobile audio player 1, for example, the search screens DISP1, DISP2, and DISP2a shown in FIG. 4, FIG. 5, FIG. 6, FIG. 8 etc. the track number data 52, 62, and 62a indicating numbers of track data to which attribute items are assigned linked with the attribute items which can be selected by the user. Due to this, the user can determine how much track data can be selected from when designating each attribute item on the search screen based on the track number data. This serves as reference for determining which attribute items to designate.

Further, in the mobile audio player 1, as shown in FIG. 8, the track increase data is displayed for each attribute item in addition to the track number data. Due to this, it is easy to search for track data newly input from the computer 3 in the mobile audio player 1.

Further, in the mobile audio player 1, when receiving track data from the computer 3, the track data is written into the HDD 13 only when the attribute item of the track data which is input is not indicated in the non-input track designation data IND. Due to this, when subscription type track data distributed in push marketing campaigns is input from the computer 3 to the mobile audio player 1, the recording of a large amount of track data which the user is not interested in into the HDD 13 by the mobile audio player 1 can be avoided. As a result, the search efficiency of the track data by the user can be raised and, at the same time, the recording capacity of the HDD 13 can be efficiently utilized.

The present invention is not limited to the above embodiments. Namely, a skilled person may perform a variety of changes, combinations, sub combinations, and replacements concerning the components of the embodiments explained above within the technical range of the present invention or its equivalent range.

For example, in the above embodiments, the case of displaying track number data indicating the number of the track data to which an attribute item was assigned in the search screen linked with each of the attribute items which can be selected by the user was exemplified, but the number of the attribute items which can be selected from on the search screen displayed next when each attribute item is selected may be displayed instead. For example, the search screen DISP1 shown in FIG. 4 can display, linked with "by Artist Name", the number of artist names which can be selected from on the search screen and the change in the number displayed where artist names are selected.

Further, in the above embodiments, the case where the present invention was applied to a mobile audio player was exemplified, but the present invention can also be applied to a mobile phone or a personal computer or other nonportable type of device. Further, in the above embodiment, as the content data of the present invention, audio data such as track data was exemplified, but image data such as video and photos may also be used. Further, in the present invention, as the recording means for storing the content data, in place of the HDD 13 shown in FIG. 1, opto-magnetic recording media such as MD®, optical recording media such as CD-R (CD-recordable) and DVD-R (DVD-recordable), semiconductor memories such as Memory Sticks® and SD Cards®, and so on may be used. Further, the present invention may also be applied to a personal computer, compact disk or other optical disk player, opto-magnetic disk player, etc.

It should be understood by those skilled in the art that various modifications, combinations, sub-combinations and alternations may occur depending on design requirements and other factors in so far as they are within scope of the appended claims or the equivalents thereof.

## Claims

1. A display control method comprising:
receiving a display instruction signal of a search screen to display a search screen of content data in accordance with that signal and
displaying, on a display, attribute item data and number data indicating the number of said content data to which said attribute item data are assigned linked together.

2. A display control method as set forth in claim 1, further comprising:
confirming communication of content data,
updating management data for managing said number data based on said attribute item data assigned to said content data when confirming communication of said content data, and
displaying a number data indicating the number of content data to which said attribute item data is assigned based on said updated management data.

3. A display control method as set forth in claim 2, further comprising:
updating change data indicating a change of said number data based on said attribute item data assigned to said content data when confirming communication of said content data, and
displaying said change data on said display.

4. A display control method as set forth in claim 1, 2 or 3, further comprising:
generating non-input contents designation data indicating attribute items of content data for which input is to be refused, and
inputting, from an external device, content data to which attribute items are assigned other than attribute items shown by said non-input contents designation data.

5. A content data reproduction apparatus (1) comprising:
a display part (14) displaying a search screen comprised of attribute item data for identifying content data,
a reproduction part reproducing said content data, and
a control part (17) configured to make said display part display attribute item data and number data indicating the number of said content data to which said attribute item data are assigned linked together.

6. A content data reproduction apparatus (1) as set forth in claim 5, further comprising:
a communication part (11) configured to communicate content data with an external device,
said control part (17) being configured to update management data for managing said number data based on said attribute item data assigned to said content data when confirming communication of said content data.

7. A content data reproduction apparatus (1) as set forth in claim 6, wherein said control part (17) is configured to update a change of data indicating a change of said number data based on said attribute item data assigned to said content data and makes said display part (14) display said change data when confirming communication of said content data.

8. A content data reproduction apparatus (1) as set forth in claim 6 or 7, wherein said control part is configured to refer to non-input contents designation data indicating attribute items of content data for which input from said external device is to be refused and inputs, from said external device, the content data to which attribute items are assigned other than attribute items shown by said non-input contents designation data.

9. A content data reproduction apparatus (1) comprising:
a display part (14) displaying a search screen, comprised of attribute item data for identifying content data, hierarchically based on the attributes,
a reproduction part reproducing said content data, and
a control part (17) configured to make said display part display an attribute item data and a number data indicating the number of said attribute item relating to attributes linked with the search screen to be displayed next by designation of said attribute item data.

10. A content data reproduction apparatus (1) as set forth in claim 9, wherein said control part (17) is configured to make said display part (14) display, linked together, the attribute item relating to the attribute linked with the search screen to be displayed next and the number data indicating the number of content data to which said attribute item is assigned when displaying that screen.

11. A program including:
a routine for carrying out the display of a display part on a search screen, including attribute item data for identifying content data, hierarchically based on the attribute,
a routine for reproducing the content data, and
a routine for carrying out the display of the display part, linked together, the attribute item data and the number data indicating the number of the attribute items relating to the attribute linked with the search screen to be displayed next by designation of the attribute item data.

12. A computer readable carrier including computer program instructions that cause a computer to implement a method, the method comprising the step of
carrying out the display of a display part on a search screen, including attribute item data for identifying content data, hierarchically based on the attribute,
reproducing the content data, and
carrying out the display of the display part, linked together, the attribute item data and the number data indicating the number of the attribute items relating to the attribute linked with the search screen to be displayed next by designation of the attribute item data.
